# EUROPEAN PATENT APPLICATION

(11) **EP 1 895 510 A1**
(43) Date of publication of application: **05.03.2008**
(21) Application number: 07114006.5
(22) Date of filing: 08.08.2007
(51) Int. Cl.: G10L 15/24

(54) **Voice recognition method and voice recognition apparatus**

(30) Priority: 29.08.2006 JP 2006232488
(71) Applicant: AISIN AW CO., LTD., Anjo-shi, Aichi 444-1192 (JP)
(72) Inventor: Miyajima, Takayuki, Aichi 444-8564 (JP)
(74) Representative: TBK-Patent

(57) **Abstract**

A navigation system includes a control apparatus 2 which recognizes a voice spoken by a driver. The control apparatus 2 comprises a recognition dictionary 16 for storing recognition candidates that are associated with target apparatuses around the driver, an image processor 9 for detecting a direction of a sight line of the driver, a control unit 3 for determining an apparatus located in the direction of the sight line of the driver, and a voice recognition processor 11, from among each of the recognition candidates in the recognition dictionary 16, for setting each of the recognition candidates associated with a target apparatus corresponding to the direction of the sight line of the driver as a recognition target range, and from the recognition target range, for selecting a recognition candidate which is highly similar to voice data which is inputted through a microphone 23.

## Description

### BACKGROUND OF THE INVENTION

### 1. Field of the Invention

The present invention relates to a voice recognition method and a voice recognition apparatus.

### 2. Description of the Related Art

Heretofore, a navigation system with a function of a voice recognition has been mounted in a vehicle to assist a safe driving. In such a system, voice signals inputted from a microphone go through a recognition process and are converted into character series data. The character series data is used as a command to control various apparatuses such as an air conditioner. It is difficult to perform a high level of recognition on regular voice recognition. Especially, there are a lot of background noises inside of a vehicle such as an audio sound, noises made during driving and so forth, therefore the inaccuracy of voice recognition has been a problem. For this problem, when a driver speaks any geographical name, a navigation system is disclosed that collates detected recognition candidates on the basis of a voice recognition and geographical name data such as "prefecture name" or "city (or any local) name" in map data. When the geographical name data and the recognition candidates are matched, the recognition candidate is recognized as a command to specify a geographical name. (e.g., see Japanese Unexamined Patent Application Publication No. 2005-114964)

### SUMMARY OF THE INVENTION

According to the system described above, the accuracy of the recognition of the geographical name improved. However, when an order of "turn up the temperature" or the like is spoken for an air conditioner, for example, the accuracy of the recognition of a voice command to control other apparatuses may not improve.

Accordingly, taking the aforementioned problem into consideration, it is an object for the present invention to provide a voice recognition method and a voice recognition apparatus for improving the accuracy of the recognition.

To achieve the aforementioned object, the present invention according to claim 1 provides a voice recognition method for recognizing a voice spoken by a speaker, comprising the steps of:
detecting a direction of a sight line of the speaker to assume a visual target object located in the direction of the sight line;
from among each of recognition candidates associated with the visual target object, setting the each of the recognition candidates corresponding to the visual target object in the direction of the sight line of the speaker as a recognition target range;
from among the each of the recognition candidates included in the recognition target range, selecting the recognition candidate which is highly similar to the voice spoken by the speaker.

The present invention according to claim 2 provides a voice recognition apparatus for recognizing a voice spoken by a speaker comprising:
a recognition dictionary which stores recognition candidates associated with a visual target object located around the speaker;
a sight line detecting means for detecting a direction of a sight line of the speaker;
a determining means for determining the visual target object located in the direction of the sight line of the speaker on the basis of the direction of the sight line;
a range setting means for, from among the each of the recognition candidates in the recognition dictionary, setting the each of the recognition candidates associated with the visual target object located in the direction of the sight line of the speaker as a recognition target range; and
a recognition means for, from among the recognition target range set by the range setting means, selecting the recognition candidate which is highly similar to voice data inputted by a voice input means.

The present invention according to claim 3 provides the voice recognition apparatus according to claim 2, wherein:
the visual target object is a control target apparatus mounted in a vehicle, and further comprising;
a vehicle-side control means for outputting a control signal to the control target apparatus on the basis of the recognition candidate selected by the recognition means.

The present invention according to claim 4 provides the voice recognition apparatus according to claim 2 or 3, wherein:
the sight line detecting means inputs image data from a filming means which films the speaker from the front, performs an image-processing of the image data, and calculates the direction of the sight line of the speaker.

The present invention according to claim 5 provides a voice recognition apparatus for recognizing a voice spoken by a speaker, comprising:
a recognition dictionary for storing recognition candidates associated with a visual target object located around the speaker;
a sight line detecting means for detecting a direction of a sight line of the speaker;
a determining means for determining the visual target object located in the direction of the sight line of the speaker on the basis of the direction of the sight line;
a priority setting means for setting higher priority on the visual target object located in the direction of the sight line of the speaker; and
a recognition means for, from among the recognition candidates in the recognition dictionary, selecting the recognition candidate which is highly similar to voice data inputted by a voice input means on the basis of the priority set by the priority setting means.

The present invention according to claim 6 provides a voice recognition apparatus for recognizing a voice spoken by a speaker, comprising:
a recognition dictionary for storing recognition candidates associated with each category;
a movement detecting means for detecting a movement of the speaker;
a range setting means for, when the movement detecting means detects the movement of the speaker, selecting the category associated with the movement of the speaker and setting the each of the recognition candidates associated with the visual target object as a recognition target range; and
a recognition means for, from among the recognition target range set by the range setting means, selecting the recognition candidate which is highly similar to voice data inputted by a voice input means.

In the present invention, the visual target object that is assumed that the speaker is looking at is detected and the recognition candidates corresponding to the visual target object are set as the recognition target range. Thus, the recognition candidate which has great possibility to match the voice is narrowed down from among a huge number of recognition candidates, and the accuracy of the recognition improves accordingly.

In the present invention, by means of the voice recognition apparatus, the visual target object that is assumed that the speaker is looking at is detected and the recognition candidates corresponding to the visual target object are set as the recognition target range. Thus, the recognition candidate which has great possibility to match the voice is narrowed down from among a huge number of recognition candidates, and the accuracy of the recognition improves accordingly.

In the voice recognition apparatus in the present invention, the visual target object is the control target apparatus mounted in the vehicle and the control target apparatus is controlled on the basis of the result of the voice recognition. Thus, especially in the case of having multiple control target apparatuses such as the case of vehicle, the outstanding effects may be achieved.

In the present invention, the direction of the sight line of the speaker is calculated through the image processing of the image data. Thus the direction of the sight line of the speaker may be detected more accurately.

In the present invention, the recognition candidates corresponding to the visual target object that is assumed that the speaker is looking at have a higher priority among a huge number of recognition candidates in the recognition dictionary. Thus, the recognition candidate which has great possibility to match the voice spoken by the speaker may eventually be selected, and the accuracy of the recognition improves accordingly.

In the present invention, the movements of the speaker and the categories are set in advance, and the recognition candidates associated with the category corresponding to the movement are set as the recognition target range. Thus, the recognition candidate which have great possibility to match the voice may be narrowed down from among a huge number of recognition candidates, and the accuracy of the recognition improves accordingly.

### BRIEF DESCRIPTION OF THE DRAWINGS

FIG. 1 is a diagram showing an example of a navigation system according to the present embodiment of the invention.

FIG. 2 is a diagram showing a position of an equipped camera.

FIG.3 is a diagram showing each position of an eyeball when a sight line moves to a) front, b) lower right, c) left, and d) lower left.

FIG. 4 is a diagram showing each position of a target apparatus.

FIG.5 is a diagram showing a table of target apparatus selection.

FIG.6 is a diagram showing a substantial part of data structure of a recognition dictionary.

FIG. 7 is a flowchart showing a procedure according to the present embodiment of the invention.

FIG. 8 is a flowchart showing a procedure according to a second embodiment of the invention.

### DETAILED DESCRIPTION OF EXEMPLARY IMPLEMENTATIONS

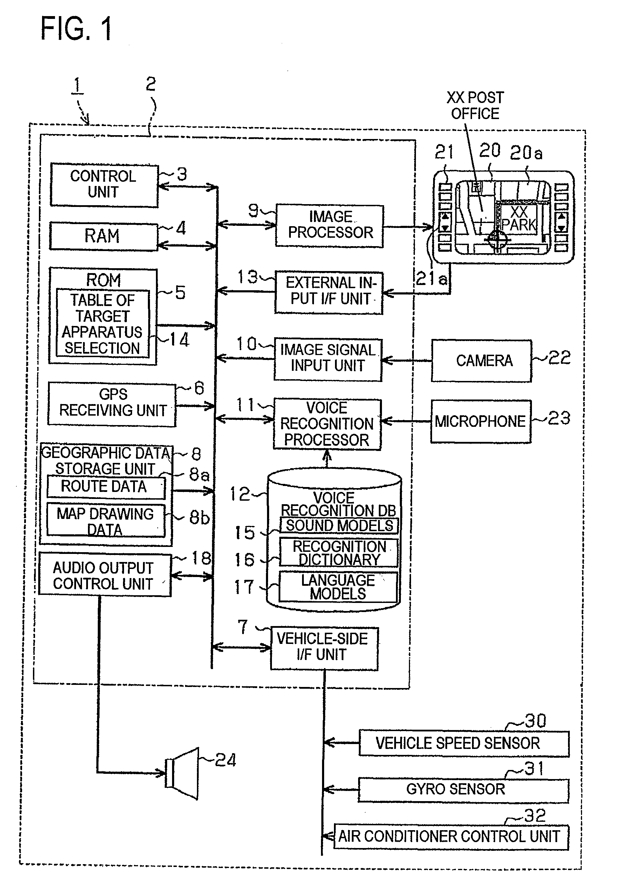

A driving assisting apparatus in the present invention is described in further detail below with reference to FIG.1 through FIG.7. FIG.1 is a block diagram illustrating a structure of a navigation system 1 mounted in an automobile (a vehicle).

As shown in FIG. 1, the navigation system 1 being a visual target object and a control target apparatus includes a control apparatus 2 serving as a voice recognition apparatus for processing a voice recognition and so forth, a display 20 serving as a visual target object and a control target apparatus for displaying various screens, a camera 22 serving as a filming means, a microphone 23 serving as a voice input means, and a speaker 24.

The control apparatus 2 includes a control unit 3 serving as a sight line detecting means, a sight line determining means, and a vehicle-side control means, a RAM 4 for temporarily storing the computed result performed by the control unit 3, a ROM 5 for storing various programs such as a route searching program, a voice recognition program and so forth, and a GPS receiving unit 6. The control unit 3 is comprised of LSI or the like and calculates the absolute coordinate that indicates the position of the vehicle based on a position detecting signal inputted by the GPS receiving unit 6. Further, the control unit 3 calculates a relative position based on a reference position by means of an autonomous navigation by inputting a vehicle speed pulse and a direction detecting signal by a vehicle speed sensor 30 and a gyro sensor 31 through a vehicle-side I/F unit 7 of the control apparatus 2. Subsequently, the control unit 3 sequentially specifies the position of the vehicle in response to the absolute coordinate on the basis of the GPS receiving unit 6.

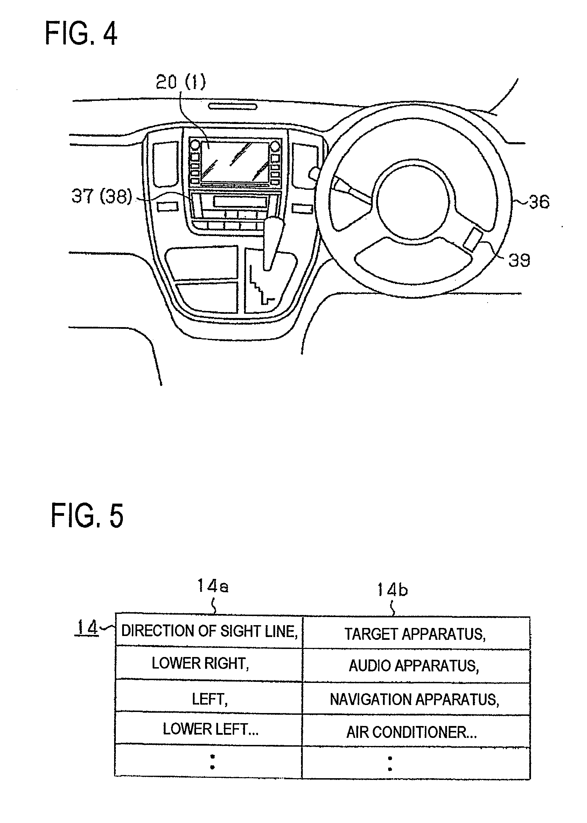

Further, the control unit 3 sends and receives various signals with an air conditioner control unit 32 through the vehicle-side I/F unit 7. The air conditioner control unit 32 controls an air conditioner 38 (See FIG.4) equipped in the vehicle by operating manually by a driver or by the result of the voice recognition by means of the control apparatus 2, e.g., a temperature adjustment, an air volume adjustment, a mode change and so forth.

When a button 21 placed around the display 20 is operated, an external input I/F unit 13 outputs the signal based on the operation to the control unit 3 or an audio output control unit 18. For example, when a button 21 for activating an audio music is operated, the audio output control unit 18 may read musical files from music database or an external storage apparatus equipped in the navigation system 1(Not shown), or may control a radio tuner (Not shown) to output the audio through the speaker 24. When a button 21a for audio-volume adjustment is operated, the audio output control unit 18 also adjusts the volume of the audio outputted from the speaker 24 corresponding to the operation.

As shown in FIG. 1, the control unit 2 includes a geographical data storage unit 8 and an image processor 9 serving as the sight line detecting means. The geographical data storage unit 8 serves as an external storage medium such as a hard disk or an optical disk incorporated. The geographical data storage unit 8 stores each of route data 8a for searching for a route to a destination and map drawing data 8b for outputting a map screen 20a on the display 20.

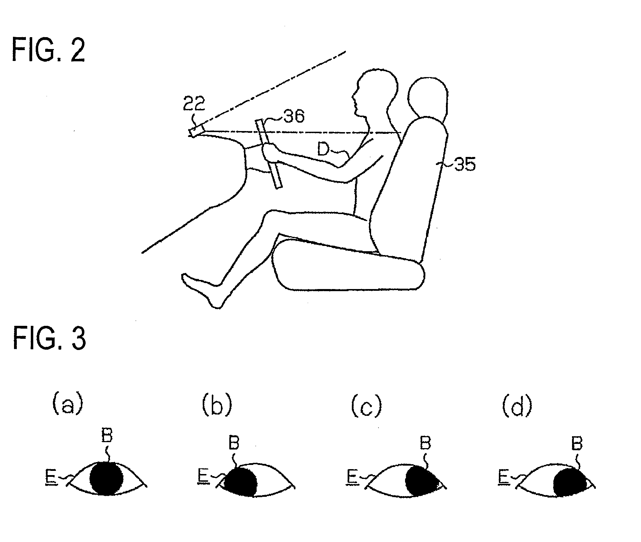

The image processor 9 inputs the image data from the camera 22 equipped in the vehicle through an image signal input unit 10 and detects the direction of the sight line of the driver (the speaker). The camera 22 locates where it may capture the driver' eyes. As shown in FIG.2, the camera 22 locates around a combination-meter or a steering wheel 36 in this embodiment. The camera 22 films mainly the head of a driver D sitting on a driver's seat 35 and outputs the image signal to the image signal input unit 10. The image signal input unit 10 generates the image data from the image signal through A/D conversion and outputs the image data to the image processor 9. The image processor 9 performs the image processing of the image data by means of a heretofore known method and detects the position of an eyeball B of driver D's eye E (See.3 (a)). Note that the camera 22 itself may perform A/D conversion of the image signal.

Subsequently, the image processor 9 inputs the image data at predetermined intervals and monitors the change of the position of the eyeball B of the eye E. When the sight line of the driver D moves from the front to the lower right (viewed from the driver's side), the image processor 9 analyzes the image data and calculates the new position of the eyeball B. When the position of the eyeball B is calculated, the image processor 9 outputs the analyzed result to the control unit 3. The control unit 3 determines the direction of the sight line of the driver D based on the analyzed result.

FIG.3 (a) through (d) are the diagrams illustrating each position of the eyeball B of one eye. For example as shown in FIG.3 (b), when the analyzed result is outputted showing that the position of the eyeball B locates at the lower right from the driver D's side, the control unit 3 determines that the direction of the sight line of the driver D is the lower right. Also, as shown in FIG. 3 (c), when the analyzed result is outputted showing that the position of the eyeball B locates at the left side from the driver D's side, the control unit 3 determines that the direction of the sight line of the driver D is the left. Further, as shown in FIG. 3 (d), when the analyzed result is outputted showing that the position of the eyeball B locates at the lower left from the driver D's side, the control unit 3 determines that the direction of the sight line of the driver D is the lower left.

On the basis of the detected direction of the sight line and a table of the target apparatus selection pre-stored in ROM 5 (See FIG. 1 and FIG.5), the control unit 3 assumes an apparatus that the driver D might look at. As shown in FIG.5, in the table of the target apparatus selection 14a, the direction of the sight line of the driver D 14a is associated with a target apparatus 14b as a category. For example as shown in FIG. 4, in case the direction of the sight line 14a is "lower right", an audio button 39 located at the lower right from the driver D' s side becomes the visual target, and "audio apparatus" becomes the target apparatus 14b accordingly. Also, in case the direction of the sight line 14a is "left", there is great possibility that the driver D is looking at the display 20 in the navigation system 1 located on the left, and the target apparatus 14b is "navigation system" accordingly. Further, the direction of the sight line 14a is "lower left", there is great possibility that the driver D is looking at the control panel 37 of the air conditioner 38 serving as a mounted equipment and a visual target object, and the target apparatus 14b is "air conditioner" accordingly. Note that the direction of the sight line 14a in this table of the target apparatus selection 14 may be the data corresponding to the coordinate of the eyeball B instead of the data corresponding to directions such as "lower right", "left" or the like. The target apparatus 14b assumed as above will be used for a voice recognition of the driver D.

The voice recognition processing is performed by means of a voice recognition processor 11 (See Fig.1) which works mainly as a range setting means and a recognition means based on a voice recognition database (hereinafter referred to the voice recognition DB 12). The voice recognition processor 11 incorporates an interface for inputting the voice signal (voice data) from the microphone 23 equipped in the vehicle (See FIG.1), LSI for a voice recognition and so forth. The microphone 23 is equipped around the driver' s seat 35 and inputs the voice spoken by the driver.

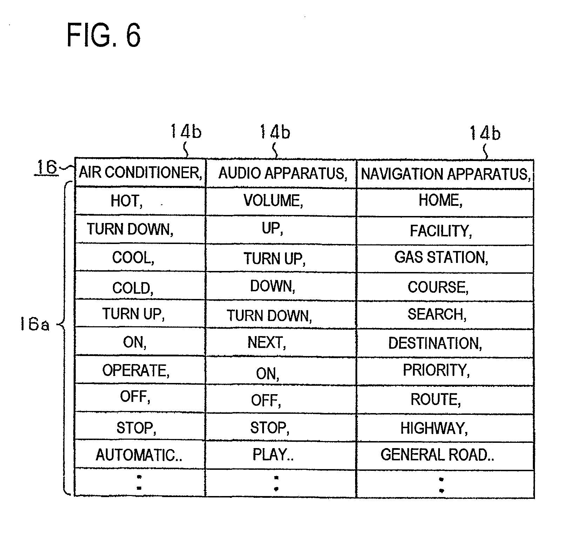

The voice recognition DB 12 stores sound models 15, a recognition dictionary 16, and language models 17. The sound models are the data in which the feature amount and the phonemes of the voice are associated. The recognition dictionary 16 stores tens to hundreds of thousands of words corresponding to the phoneme series. The language models 17 are the data which models the probability for words to position at the beginning or the end of sentences, the probability of connection between a series of words, modifying relationships, and so forth. FIG.6 is a diagram illustrating a part of the structure of the recognition dictionary 16 in the present embodiment. As shown in FIG.6, recognition candidates 16a stored in the recognition dictionary 16 are grouped by the target apparatuses 14b. The target apparatuses 14b are the data corresponding to the direction of the sight line 14a in the table of the target apparatus selection 14. The recognition candidates 16a are the words relating to the operation on each target apparatus 14b.

First, the voice recognition processor 11 calculates the feature of the wave of the inputted voice signal. Then the calculated feature amount is collated with the sound models 15 to select the phonemes corresponding to the feature amount such as "a" or "tsu". However, even when the driver D was supposed to pronounce "atui", due to the individual's pronouncing habit, not only the phoneme series "atui" but also other similar phoneme series such as "hatsui" or "asui" may be detected. Further, the voice recognition processor 11 collates these detected phoneme series with the recognition dictionary 16 to select the recognition candidates. When the control unit 3 assumes that the target apparatus 14b that the driver D is looking at is "air conditioner", the voice recognition processor 11 narrows down to the recognition candidates 16a that relates to the target apparatus 14b "air conditioner" from among a huge number of recognition candidates 16a. Then the narrowed recognition candidates 16a are determined to be the recognition target range. Then each of the recognition candidates 16a within the recognition target range and each of the phoneme series calculated on the basis of the sound models 15 are collated to calculate the similarity, and the recognition candidate 16a which has highest similarity is determined. By setting the recognition target range as described above, the recognition candidates 16a that have low possibility to be a target even with a similar sound feature may be excluded, and the accuracy of the recognition may improve accordingly.

Further, the voice recognition processor 11 calculates the probability of connecting relations between a series of words using the language models 17 and determines the consistency. For example, when a plurality of words are recognized such as "temperature" and "turn up", "route" and "search", or "volume" and "turn up", the voice recognition processor 11 calculates the probability of connecting each of the series of words and confirms the result of the recognition if the probability is high. When the result of the recognition is confirmed, the voice recognition processor 11 outputs the result of the recognition to the control unit 3. Then the control unit 3 outputs the command based on the result of the recognition to the audio output control unit 18, the air conditioner control unit 32 and the like.

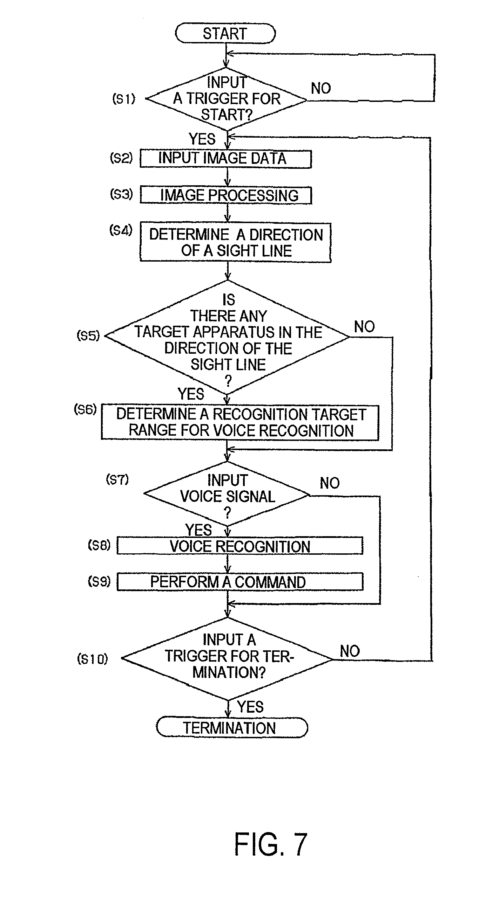

Next, the process of the voice recognition in the present embodiment will be described below with reference to FIG.7. First, the control unit 3 stands by the input of the trigger for starting the voice recognition process (S1: step 1). The trigger for starting the process is "on" signal outputted by the ignition of the vehicle in the present embodiment, however, it may be a button for starting the voice recognition. When the trigger for starting the process is inputted (YES in S1), the image processor 9 inputs the image data corresponding to the filmed driver D's head through the image signal input unit 10 (S2: step 2). Then the image processor 9 performs the image processing of the inputted image data by a heretofore known processing method and detects the position of the eyeball B of the driver D (S3: step 3).

The control unit 3 inputs the analyzed result through the image processor 9 and determines the direction of the sight line 14a of the driver D (S4: step 4). Then, whether any target apparatus 14b locates in the direction of the sight line 14a or not is determined based on the table of the target apparatus selection 14 shown in FIG. 5 (S5: step 5). For example, when the direction of the sight line 14a is "lower right", this direction of the sight line 14a is associated with the target apparatus 14b "audio apparatus", therefore the target apparatus 14b is determined to locate in the direction of the sight line 14a (YES in S5) and the flow proceeds to S6 (step 6).

In step 6, the control unit 3 outputs the direction of sight line 14a to the voice recognition processor 11, and the voice recognition processor 11 determines the recognition target range from among the each of the recognition candidates 16a stored in the recognition dictionary 16. For example, when the target apparatus 14b "audio apparatus" is selected, the each of the recognition candidates 16a associated with the target apparatus 14b "voice apparatus" become the recognition target.

In step 7, the voice recognition processor 11 determines whether or not any voice signal is inputted from the microphone 23. When no voice signals are inputted (NO in S7), the flow proceeds to S10 (step 10). On the other hand, when some voice signal is inputted in step 7 (YES in S7), the voice recognition processor 11 recognizes the voice (S8: step 8). As described above, the voice recognition processor 11 detects the feature amount of the voice signal and then calculates the phoneme series that are similar to the feature amount on the basis of the sound models 15. The each of the calculated phoneme series is collated with the recognition candidates 16a within the recognition target range set in step 6 to select the each of the similar recognition candidates 16a. When the each of the recognition candidates 16a is determined, the probability of connecting relations for the each of the recognition candidates 16a is calculated using the language models 17, subsequently the sentence having the great probability is confirmed as the result of the recognition.

When the result of the recognition is confirmed, the control unit 3 sends the command based on the result to the target apparatus 14b (S9 : step 9). For example, when the target apparatus 14b is "air conditioner" and the result of the recognition is "hot", the control unit 3 outputs the command to operate to lower the predetermined temperature to the air conditioner 38 through the vehicle-side I/F unit 7. In addition, when the target apparatus 14b is "audio apparatus" and the recognition result is "turn up the volume" for example, the control unit 3 outputs the command to the audio output control unit 18 to turn up the volume. Further, when the target apparatus 14b is "navigation system" and the result of the recognition is "home" for example, the control unit 3 searches the route from the current position of the vehicle to the pre-registered home with the route data 8a and the like, and outputs the searched route on the display 20.

On the other hand, in step 5, if no target apparatus 14b associated with the direction of the sight line 14a are found (NO in S5), the flow proceeds to S7 (step 7) and each of the recognition candidates 16a and each of the phoneme series are collated without determining the recognition target range from among the recognition candidates 16a in the recognition dictionary 16. Then the control unit 3 commands and controls the target apparatus 14b on the basis of the result of the voice recognition (step 9).

In step 9, when the command is performed, the control unit 3 determines whether the trigger for termination is inputted or not (Step 10). In the present embodiment, the trigger for termination is "off" signal of the ignition, however, it may be a button for termination. With the determination of inputting no trigger for termination (NO in step 10), return to step 2 and the control unit 3 starts to monitor the direction of the sight line 14a of the driver D and repeats the process of the voice recognition corresponding to the direction of the sight line 14a. With the determination of inputting the trigger for termination (YES in step 10), the control unit 3 terminates the process.

Hereinafter, advantages to be obtained according to the present embodiment will be described.

The control unit 3 in the navigation system 1 determines the target apparatus 14b that locates in the direction of the sight line of the driver D based on the analyzed result by the image processor 9. The voice recognition processor 11 sets each of the recognition candidates 16a associated with the target apparatus 14b that locates in the direction of the sight line 14a of the driver D as the recognition target range from among the recognition candidates 16a in the recognition dictionary 16. And from the recognition target range, the recognition candidate 16a which is highly similar to the phoneme series based on the voice spoken by the driver D is confirmed as the result of the recognition. Therefore, not only the feature amount of the voice signals or the probability of connecting relations between a series of words, but also the detection of the target apparatus 14b that locates in the direction of the sight line of the driver D and making use of it may narrow down to the recognition candidate 16a which has great possibility to match what was spoken from among a huge number of recognition candidates 16a in the voice recognition DB 12. Thereby the recognition candidates 16a that are not corresponding to the direction of the sight line of the driver D may be excluded from the recognition target. Accordingly, an erroneous result may be avoided such as that the recognition candidate 16a which does not apply to the current situation of the driver D is confirmed due to the similar feature amount of the voice. Thus, setting the recognition target range may assist the process of the voice recognition so as to improve the accuracy of the recognition. Further, setting the recognition target range may eliminate the number of the recognition candidates 16a to collate with the phoneme series, and consequently may shorten the time for processing.

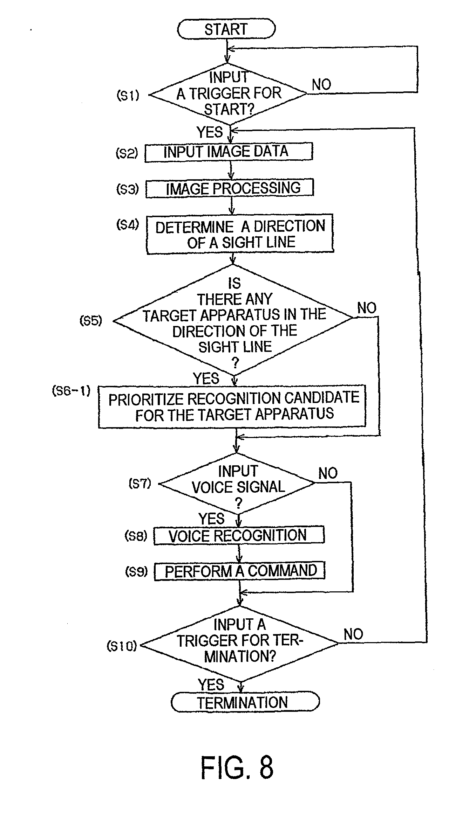

The image processor 9 detects the position of the eyeball B of the driver D on the basis of the image data inputted from the camera 22. Thereby, the direction of the sight line 14a of the speaker may be detected more accurately compared to the case of using infrared radar or the like for detecting the position of the eyeball.
Next, the present invention is described below with reference to a second embodiment in conjunction with FIG.8. Note that the second embodiment is the modified structure of the process of the first embodiment, and the details of overlapping parts will be omitted accordingly.

The second embodiment only changes the process in S6 (step 6) of the first embodiment. In S5 (step 5) shown in FIG.8, when the target apparatus 14b is determined to locate in the direction of the sight line (YES in step 5), the voice recognition processor 11 serving as a priority setting means prioritizes the recognition candidates 16a associated with the target apparatus 14b (S6-1). More specifically, the voice recognition processor 11 sets a probability score of the recognition candidates 16a associated with the target apparatus 14b higher. In the initial condition where the direction of the sight line 14a of the driver D is not detected, the probability score of each of the recognition candidates 16a is set by default or with the set value according to individual's frequency of the usage or with the set value according to general frequency of the usage and so forth. To set the probability score higher, a predetermined value may be added to the probability score, for example.

In step 7, in case some voice signal is determined to be input (YES in step 7), the voice recognition processor 11 recognizes the voice using the probability score (S8: step 8). That is to say, without narrowing down the recognition candidates 16a, the recognition candidates 16a which have high probability score are prioritized and confirmed when determining the similarity between each of the recognition candidates 16a and the phoneme series.

Hereinafter, in addition to the advantages according to the first embodiment, the advantages to be obtained according to the second embodiment will be described.

The voice recognition processor 11 prioritizes each of the recognition candidates 16a for the target apparatus 14b corresponding to the direction of the sight line 14a of the driver D and performs the voice recognition. Thereby, the voice recognition processor 11 may determine the recognition candidates 16a which have great probability to match the spoken voice without eliminating the recognition candidates to collate with the phoneme series. Accordingly, the voice may be recognized even when the direction of the sight line of the driver D is not associated with the contents of what was spoken.

Each foregoing embodiment may be modified as below.
In the first and the second embodiment, an arrangement was made wherein the recognition candidates 16a in the recognition dictionary 16 and the target apparatus 14b are associated. Otherwise, the language models 17 may be set to associate with the target apparatus 14b. For example, when the direction of the sight line 14a is associated with the target apparatus 14b "air conditioner", the probability of the words relating to the operation of the air conditioner 38 such as "temperature", "turn up", or "turn down" and the probability of connecting those words may be set higher than the default. And the accuracy of recognition may improve accordingly.

The user may choose the mode of the voice recognition on the basis of the process in the first embodiment or the mode of the voice recognition on the basis of the process in the second embodiment. In the second embodiment, an arrangement was made to set the probability score of the recognition candidates 16a associated with the target apparatus 14b in the direction of the sight line 14a higher, however, other arrangements may be made as long as prioritizing those recognition candidates 16a. For example, the recognition candidates 16a associated with the target apparatus 14b in the direction of the sight line 14a are collated first, and if any recognition candidates with high similarity are not found, the recognition candidates 16a for other target apparatus 14b may be collated instead.

In each embodiment, an arrangement was made wherein the image processor 9 monitors the changes of the sight line of the driver D and the voice recognition processor 11 stands by for input of a voice signal after inputting the trigger for starting the process. However, the sight line detection and the voice recognition may be arranged to start only when the driver presses a button. In this case, the trigger for starting the process is the operation of pressing the start button by the driver D, and the trigger for the termination, for example, is the operation of pressing the termination button by the driver or a timer which is a signal for indicating predetermined passage of time.

In each embodiment, an arrangement may be made to pre-register the relationship between the direction of the sight line 14a or movement of the driver D and the target apparatus 14b. For example, pre-register a table wherein a movement "fan a face with hand" and a target apparatus 14b "air conditioner" are associated, or the like. Then, when the image processor 9 serving as a movement detecting means detects the movement "fan a face with hand", the voice recognition processor 11 narrows down the recognition candidates 16a associated with the target apparatus 14b "air conditioner" as the recognition target range based on the table. Note that the table may be stored for each user.

In each embodiment, the air conditioner 38, the navigation system 1, the audio button 39 and so forth located around the driver D were set as the target categories, however, other apparatuses may be set as the target categories. The relationship between the direction of the sight line 14a and the target apparatus 14b may vary according to the vehicle structure. In addition, the one direction of the sight line 14a may be associated with a plurality of target apparatuses 14b. For example, the direction of the sight line 14a "lower left" may be associated with the target apparatuses of the air conditioner 38 and the navigation system 1. Further, when the direction of the sight line 14a is any lefts including "left" or "lower left", the target apparatuses may be all the apparatuses located on the left.

In the embodiment above, the voice recognition method and the voice recognition apparatus were applied to the navigation system 1 mounted in a vehicle, however, they may be applied to any other apparatuses having a voice recognition function such as a game, a robotic system, and so forth.
A navigation system includes a control apparatus 2 which recognizes a voice spoken by a driver. The control apparatus 2 comprises a recognition dictionary 16 for storing recognition candidates that are associated with target apparatuses around the driver, an image processor 9 for detecting a direction of a sight line of the driver, a control unit 3 for determining an apparatus located in the direction of the sight line of the driver, and a voice recognition processor 11, from among each of the recognition candidates in the recognition dictionary 16, for setting each of the recognition candidates associated with a target apparatus corresponding to the direction of the sight line of the driver as a recognition target range, and from the recognition target range, for selecting a recognition candidate which is highly similar to voice data which is inputted through a microphone 23.

### [Reference Numerals]

- 1:: a navigation system serving as a visual target object and a mounted apparatus
- 2:: a control apparatus serving as a voice recognition apparatus
- 3:: a control unit serving as a sight line detecting means, a sight line determining means, and a vehicle-side control means
- 9:: an image processor serving as a sight line detecting means and a movement detecting means
- 11:: a voice recognition processor serving as a range setting means, a voice recognition means, and a priority setting means
- 14a:: a direction of a sight line
- 14b:: a target apparatus serving as a target category
- 16:: a recognition dictionary
- 16a:: a recognition candidate
- 20:: a display serving as a visual target object and a mounted apparatus
- 22:: a camera serving as a filming means
- 23:: a microphone serving as a voice input means
- 38:: an air conditioner serving as a visual target object and a mounted apparatus
- D:: a driver as a speaker
FIG.1
- 3:: control unit
- 14:: table of target apparatus selection
- 6:: GPS receiving unit
- 8:: geographic data storage unit
- 8a:: route data
- 8b:: map drawing data
- 18:: audio output control unit
- 9:: image processor
- 13:: external input I/F unit
- 10:: image signal input unit
- 11:: voice recognition processor
- 12:: voice recognition DB
- 15:: sound models
- 16:: recognition dictionary
- 17:: language models
- 7:: vehicle-side I/F unit
- 22:: camera
- 23:: microphone
- 30:: vehicle speed sensor
- 31:: gyro sensor
- 32:: air conditioner control unit
- Z1:: XX Post office
- Z2:: XX Park
FIG.5
- 14a::
- Z3:: direction of sight line,
- Z4:: lower right,
- Z5:: left,
- Z6:: lower left ..
- 14b::
- Z7:: target apparatus,
- Z8:: audio apparatus,
- Z9:: navigation apparatus,
- Z10:: air conditioner ..
FIG.6
- 14b::
- Z11:: air conditioner,
- Z12:: hot,
- Z13:: turn down,
- Z14:: cool,
- Z15:: cold,
- Z16:: turn up,
- Z17:: on,
- Z18:: operate,
- Z19:: off,
- Z20:: stop,
- Z21:: automatic ..
- 14b::
- Z22:: audio apparatus,
- Z23:: volume,
- Z24:: up,
- Z25:: turn up,
- Z26:: down,
- Z27:: turn down,
- Z28:: next,
- Z29:: on,
- Z30:: off,
- Z31:: stop,
- Z32:: play ..
- 14b::
- Z33:: navigation apparatus,
- Z34:: home,
- Z35:: facility,
- Z36:: gas station,
- Z37:: course,
- Z38:: search,
- Z39:: destination,
- Z40:: priority,
- Z41:: route,
- Z42:: highway,
- Z43:: general road ..
FIG.7
- Z44:: Start
- S1:: input a trigger for start?
- S2:: input image data
- S3:: image processing
- S4:: determine a direction of a sight line
- S5 :: is there any target apparatus in the direction of the sight line?
- S6:: determine a recognition target range for voice recognition
- S7:: input voice signal?
- S8:: voice recognition
- S9:: perform a command
- S10:: input a trigger for termination?
- Z45:: Termination
FIG.8
- Z46:: Start
- S1:: input a trigger for start?
- S2:: input image data
- S3:: image processing
- S4:: determine a direction of a sight line
- S5:: is there any target apparatus in the direction of the sight line?
- S6-1:: prioritize recognition candidate for the target apparatus
- S7:: input voice signal?
- S8:: voice recognition
- S9:: perform a command
- S10:: input a trigger for termination?
- Z47:: Termination

## Claims

1. A voice recognition method for recognizing a voice spoken by a speaker (D), comprising the steps of:
detecting a direction of a sight line (14a) of the speaker (D) to assume a visual target object (1, 20, 38) located in the direction of the sight line (14a);
from among each of recognition candidates (16a) associated with the visual target object (1, 20, 38), setting the each of the recognition candidates (16a) corresponding to the visual target object (1, 20, 38) in the direction of the sight line (14a) of the speaker (D) as a recognition target range;
from among the each of the recognition candidates (16a) included in the recognition target range, selecting the recognition candidate (16a) which is highly similar to the voice spoken by the speaker (D).

2. A voice recognition apparatus (2) for recognizing a voice spoken by a speaker (D) comprising:
a recognition dictionary (16) which stores recognition candidates (16a) associated with a visual target object (1, 20, 38) located around the speaker (D);
a sight line detecting means (9) for detecting a direction of a sight line (14a) of the speaker (D);
a determining means (3) for determining the visual target object (1, 20, 38) located in the direction of the sight line (14a) of the speaker (D) on the basis of the direction of the sight line (14a);
a range setting means (11) for, from among the each of the recognition candidates (16a) in the recognition dictionary (16), setting the each of the recognition candidates (16a) associated with the visual target object (1, 20, 38) located in the direction of the sight line (14a) of the speaker (D) as a recognition target range; and
a recognition means (11) for, from among the recognition target range set by the range setting means (11), selecting the recognition candidate (16a) which is highly similar to voice data inputted by a voice input means (23).

3. The voice recognition apparatus (2) according to claim 2, wherein:
the visual target object (1, 20, 38) is a control target apparatus (1, 20, 38) mounted in a vehicle, and further comprising;
a vehicle-side control means (3) for outputting a control signal to the control target apparatus (1, 20, 38) on the basis of the recognition candidate (16a) selected by the recognition means (11).

4. The voice recognition apparatus (2) according to claim 2 or 3, wherein:
the sight line detecting means (3) inputs image data from a filming means (22) which films the speaker (D) from the front, performs an image-processing of the image data, and calculates the direction of the sight line (14a) of the speaker (D).

5. A voice recognition apparatus (2) for recognizing a voice spoken by a speaker (D), comprising:
a recognition dictionary (16) for storing recognition candidates (16a) associated with a visual target object (1, 20, 38) located around the speaker (D);
a sight line detecting means (3) for detecting a direction of a sight line (14a) of the speaker (D);
a determining means (3) for determining the visual target object (1, 20, 38) located in the direction of the sight line (14a) of the speaker (D) on the basis of the direction of the sight line (14a);
a priority setting means (11) for setting higher priority on the visual target object (1, 20, 38) located in the direction of the sight line (14a) of the speaker (D); and
a recognition means (11) for, from among the recognition candidates (16a) in the recognition dictionary (16), selecting the recognition candidate (16a) which is highly similar to voice data inputted by a voice input means (23) on the basis of the priority set by the priority setting means (11).

6. A voice recognition apparatus (2) for recognizing a voice spoken by a speaker (D), comprising:
a recognition dictionary (16) for storing recognition candidates (16a) associated with each category (14b);
a movement detecting means (9) for detecting a movement of the speaker (D);
a range setting means (11) for, when the movement detecting means (9) detects the movement of the speaker (D), selecting the category (14b) associated with the movement of the speaker (D) and setting the each of the recognition candidates (16a) associated with the visual target object (1, 20, 38) as a recognition target range; and
a recognition means (11) for, from among the recognition target range set by the range setting means (11), selecting the recognition candidate (16a) which is highly similar to voice data inputted by a voice input means (23).
